# EUROPEAN PATENT APPLICATION

(11) **EP 4 850 524 A1**
(43) Date of publication of application: **09.12.2026**
(21) Application number: 25181079.2
(22) Date of filing: 05.06.2025
(51) Int. Cl.: A01K 5/00

(54) **FEED MIXER**

(71) Applicant: Trioliet Holding B.V., 7575 BW Oldenzaal (NL)
(72) Inventor: Liet, Mr. Robert Jan, 7573 CS Oldenzaal (NL)
(74) Representative: Grünecker Patent- und Rechtsanwälte PartG mbB

(57) **Abstract**

Feed mixer comprising a container comprising a bottom and a wall extending upward from the bottom, and a mixing element arranged inside the container, wherein the mixing element comprises a central column, and an auger flighting arranged on the central column, wherein the auger flighting has a first radius closer to the bottom of the container and a second radius further away from the bottom of the container, and wherein the second radius is larger than 60%, in particular larger than 75%, of a distance between the central column and the wall of the container.

## Description

### Field of the invention

The present invention relates to a feed mixer, in particular a feed mixer to be used as a feed distribution wagon.

### Background

Feed mixers are generally known in the art. In particular, in big dairies, electrically driven stationary mixers have become more and more popular, because of their low energy cost, reliability and ability to automate the loading process of feed and the discharge process into feed distribution wagons

In order to distribute feed from the stationary mixers, mobile feed mixers that can serve as feed distribution wagons have been developed, in particular adapted for an even distribution and discharge of feed. These machines normally comprise a container for feeding material and mixing means, e.g., vertical augers, to mix the feeding material. The container typically includes a bottom and a substantially conically flaring front wall and rear wall, and generally flattened side walls. Further, the container is open at its upwardly facing side so that it can be loaded through this opening. The mixing augers typically taper towards the top and are driven around a vertical axis in such a way that feed from the bottom of the container is conveyed upwards and then flows back to the bottom. In this way, the feed is mixed and loosened. Such a feed mixer is known, for example, from EP 1 527 678 A1.

Typically, such feed mixers further comprise openings or windows, through which the feed can be dispensed to the outside of the mixer, for example, in order to feed livestock. These windows may, for example, extend along the side wall of the container, while having a relatively low height. This can lead to an even distribution of feed. Further, feed mixers serving as feed distribution wagons often forego cutting knives that are present in stationary mixers, which means that they have a lower power demand and can operate at lower rotations per minute. This results in less wear and tear on the feed mixer.

However, in the known feed mixers, it is possible that feed that has been transported from the bottom of the container to the top sticks together, leading to the phenomenon of bridging, where more and more feed is accumulated and compacted, interfering with and potentially blocking the flow of the feed from top to bottom and back. This, in turn, may prevent feed flowing back down to the bottom, sometimes hindering the flow of feed to the distribution openings, which, in particular, may result in an uneven distribution of feed.

Thus, the object of the present invention is to provide an improved feed mixer, in particular to be used as a feed distribution wagon.

### Summary of the invention

This object is achieved with a feed mixer according to claim 1. Further embodiments are defined in the dependent claims.

The feed mixer comprises a container, comprising a bottom and a wall extending upward from the bottom, and a mixing element arranged inside the container. The mixing element comprises a central column, and an auger flighting arranged on the central column, wherein the auger flighting has a first radius closer to the bottom of the container and a second radius further away from the bottom of the container, wherein the second radius is larger than 60% of a distance between the center of the central column and the wall of the container, in particular larger than 75% of a distance between the central column and the wall of the container.

In particular, this distance may be the distance between the center of the central column and the inner side of the wall of the container. For example, the second radius may extend up to a distance of 25 cm from the wall.

Here, the terms "top" and "bottom" refer to the situation when the mixing element is installed inside of the container. In other words, the bottom of the auger flighting is closer to the bottom of the container than the top of the auger flighting. The term "flighting" is used in its normal meaning in the field of auger conveyors or mixers. As such, it refers to the helical structure that conveys the material, in this case feed, inside the auger. Further, herein, the auger flighting is defined as starting at the bottom and ending at the top.

Further, if not specified otherwise, the terms "front" and "back", when used in relation to the mixing element, are defined by the direction of rotation of the mixing element in normal operation. The terms "ahead of" and "behind" are to be understood in an analogous manner. Additionally, the term "lateral side" may be used to indicate a side that is at least partially parallel to the direction of rotation of the mixing element in normal operation and normal to the bottom of the container.

In accordance with these definitions, the final edge of the auger flighting at its end, i.e. its top, that is aligned transversal to the direction of rotation of the mixing element, may be referred to as the back edge of the auger flighting.

Here and in the following, the term "turn" in the context of an auger is used in its usual meaning, i.e., it denotes one full precession (i.e., by 360°) along the auger flighting. Consequently, a quarter of a turn denotes a precession by 90° along the auger flighting. In accordance with the definition further above, the first turn of the flighting is the bottom-most turn, and the last turn of the flighting is the top-most turn.

The radius of the auger flighting is defined as the radial distance from the center of the central column to an outer edge of the flighting. In particular, the radius may be measured in a direction perpendicular to the vertical axis of the central column. For example, the radius may be measured in a plan view of the feed mixer. It is possible that the first radius is a radius of the bottom-most turn of the auger flighting, for example one quarter of a turn after the start of the auger flighting. Similarly, the second radius may be a radius of the top-most turn of the auger flighting, for example one quarter of a turn before the end of the auger flighting. It is to be noted that these values are merely exemplary.

In operation, the mixing element is driven by suitable driving means around the central column. The driving means may, for example, comprise a hydrostatic drive. It is also possible that the driving means comprise a mechanical drive. The driving means may further comprise an electric drive. It is possible that the driving means use different types of motors in different situations. For example, the driving means may use an electric drive during stationary operation of the feed mixer. In another example, the driving means may use a hydrostatic drive or a mechanical drive, in particular using a speed adjusting power shift, during mobile operation of the feed mixer. The powershift gearbox may for example, enable a relatively low speed operation during normal distribution and a high speed operation for a fast removal of the last remaining feed in the mixer. The driving means may be operable to gradually increase or decrease a rotational speed of the mixing element. In particular, the driving means may be operable to gradually change the rotational speed of the mixing element as a function of a feed discharge rate from the feed mixer. The discharge rate may, for example, be determined by monitoring the weight of the discharged feed with appropriate weighing means and relating the change in weight to time and/or a distance traveled by the feed mixer. The weighing means may be part of the feed mixer and/or arranged at the feed distribution site. For example, the driving means may be configured to gradually increase the rotational speed of the mixing element as the feed discharge rate, for example in weight per second, decreases.

Due to the above-mentioned rotation of the mixing element around the central column, the auger flighting transports feed from the bottom to the top, as in a known mixing auger. Since the radius of the auger flighting according to the invention is larger at the top than in conventional mixing augers, there may be less free space between the mixing element and the wall of the container at the top of the mixing element than in a conventional feed mixer. Thus, it might be expected that less feed can flow back from the top of the mixing element to the bottom.

However, the inventors of the present application have found that this design reduces the amount of bridging that occurs at the top of the feed mixer, thus increasing feed flow in the mixer. This is, in particular, due to the fact that in conventional feed mixers, there tends to be a large distance between the mixing element and the wall of the feed mixer, or between adjacent mixing elements if the feed mixer comprises more than one mixing element. The conventional mixing augers, thus, drop the feed relatively close to the center of the mixer. If bridging of feed occurs in the above-mentioned free spaces, the conventional mixing augers, in particular, cannot remove the bridging by dropping "fresh" feed on top of the bridge. Further, in conventional augers, bridging can occur close to the walls of the container, where feed should be flowing downwards.

In contrast, the mixing element according to the invention drops the feed closer to the walls (or an adjacent mixing element), where it can flow down to the bottom. In particular, the auger flighting according to the invention has a larger radial "reach" on where the feed can be dropped. Hence, it is possible to drop "fresh" feed on a forming bridge to remove that forming bridge.

The second radius may be equal to or larger than the first radius. As mentioned further above, conventional auger mixers typically comprise a flighting that tapers from the bottom to the top, where the radius is smaller at the top than at the bottom. In contrast, the auger flighting of the present invention may at least partially be tapered in the opposite direction when compared with tapered auger flightings used in the prior art, which are wider at the bottom and narrower at the top. Thus, in the following, an auger flighting where a second radius closer to the top is larger than a first radius closer to the bottom may also be referred to as an inversely tapered auger flighting.

The inverse tapering may result in an efficient transport of feed from the center of the feed mixer to the walls. The reason for this that the feed may be predominantly picked up close to the central column at the bottom of the feed mixer, because the auger flighting has a small radius there. Since the radius of the flighting increases towards the top, the feed may then be moved from the center of the feed mixer closer to the walls at the top as it is transported upwards. Thus, the inversely tapered auger flighting may drop the feed closer to the walls (or an adjacent mixing element), where it can flow down to the bottom.

It is possible that the radius of the auger flighting increases from the first radius to the second radius within one turn of the auger flighting. It has been found that this may further improve the transport capabilities of the mixing element. It also may further reduce bridging of feed.

The auger flighting may comprise less than three turns, in particular less than two turns. The auger flighting may comprise at least one turn. Thus, the flighting may be easy to manufacture in a robust way, while providing good mixing results.

A third radius of the auger flighting at its bottom may be equal to a radius of the central column. In other words, the auger flighting may start directly at the central column. As such, the auger flighting may lack a pickup edge that extends in a radial direction at its start. Such an arrangement may prevent fibrous feed from folding around the flighting at the bottom of the auger and accumulating there.

The mixing element may further comprise at least one wing arranged at the bottom of the mixing element and extending radially outward from the central column. Here, the term "wing" generally denotes an element that has a larger length than width. In the context of the present invention, the length of the wing extends along a radial direction of the mixing element. The length of a wing may, in particular, be defined as the distance between the center of the central column and an outermost edge of the wing in a radial direction. The width of a wing may, correspondingly, be a distance in a direction that is normal to the direction of the length of the wing and normal to the bottom of the container. In particular, the width of a wing may refer to a distance between a front-most edge of the wing and a back-most edge of the wing in a direction of movement of the wing during operation of the feed mixer. Correspondingly, the height of a wing may be a distance between the bottom of the container and a top surface of the wing.

The length of a wing may be more than 80%, in particular more than 98%, of a distance between the central column and the wall of the container. This distance may be the distance between the center of the central column and the inner side of the wall of the container. For example, a wing length may extend up to a distance of 2.5 cm from the wall. A wing with such a length may be able to efficiently mix and expel feed at the bottom of the container.

In operation, the at least one wing may be used to move the feed on the bottom of the container. Further, the at least one wing may push feed out of the feed mixer through corresponding openings in order to distribute feed to the outside, for example, in order to feed livestock.

The mixing element may comprise three or more wings, in particular four or more wings. A relatively high number of wings, such as at least three or four wings, may further improve regularity with which feed is distributed.

The at least one wing may be wedge-shaped. In particular, the wing may comprise a first side on the front of the wing, and a second side on the back of the wing. In other words, the first side may form the front surface of the wing that pushes the feed when the feed mixer is operated. The first side may enclose a first angle with the bottom of the container, and the second side may a second angle with the top surface of the bottom of the container. The second angle may be larger than the first angle. The first and/or the second side may have a flat profile. It is also possible that the first and/or second side have an at least partially curved profile.

In other words, in a wedge-shaped wing, the height of the wing may change along its width. In particular, the height of the wing may increase starting from a front edge of the wing until it reaches a maximum height and then may decrease again to a back edge of the wing. In particular, the decrease of the height at the back of the wing may be steeper than the increase of the height at the front of the wing.

Wings with a wedge-shaped design may move feed in an efficient way from the center of the mixing element towards any openings in the walls of the container. Further, a wedge-shaped wing is structurally robust. Additionally the steeper side at the back of the wing may decrease the likelihood that feed remains on the wing.

It is further possible that the height of a wing, i.e., the distance between the bottom of the container and the top surface of the wing, changes along its length. In particular, the height of the wing may decrease in a radial direction from the center of the mixing element. In other words, a height of the wing closer to the center of the mixing element may be larger than a height of the wing further away from the center of the mixing element. Such a wing design may reduce the power consumption of the mixing element.

A skirt may be arranged on the at least one wing. For example, the skirt may be provided on a lateral side of the at least one wing, in particular on the outermost lateral side of the at least one wing. The skirt may comprise a plate that is arranged substantially parallel to the wall of the container.

The skirt may comprise a first part that at least partially overlaps with the wing. The first part may have an at least partially triangular height profile when viewed in plan view along a radial direction of the mixing element. It is also possible that the height profile of the skirt corresponds to a height profile of the wing when viewed in plan view along a radial direction of the mixing element.

In particular, the height of the skirt may increase starting from the front of the skirt going backwards until it reaches at least a maximum height of the wing. As such, the skirt may close off the wing on its lateral side, and prevent feed from being moved underneath the wing.

The skirt may further comprise a second part extending backwards from the first part of the skirt. The second part may have a height that is equal or larger than a maximum height of the wing. The second part may extend parallel to the inner wall of the container. In particular, the second part may have a curvature that corresponds to the curvature of the inner side of the wall of the container when viewed in plan view from above. Further, when viewed in plan view from above, the second part may extend along an arc that covers an angle between 30° and 60°.

The feed mixer may further comprise one or more openings arranged in the wall of the container for dispensing feed. In particular, the at least one wing may be configured to expel feed through the one or more openings in operation of the feed mixer. A vertical distance between the top of the openings and the topmost turn of the auger flighting may be between 0 cm and 60 cm. Thus, feed that is dropped close to the wall from the top of the mixing element may be able to prevent or remove feed that is starting to bridge above the openings.

The mixing element may be a first mixing element, and the feed mixer may further comprise at least a second mixing element. The second mixing element may be of the same type as the mixing element described above. In other words, the second mixing element may have one or more features of the mixing element as described above. Providing a second mixing element, in particular of the same type, may allow for better a better mixing and distribution of an increased amount of feed. The part of the container where a mixing element is arranged, and where feed is predominantly treated by that mixing element may also be referred to as a compartment of the container in the following. Accordingly, if the feed mixer comprises two mixing elements, the container may comprise two compartments.

The first and/or the second mixing element may comprise at least one wing provided with a skirt comprising a second part that extend along an arc that covers an angle between 30° and 60° when viewed in plan view from above. In this way, the second part of the skirt may be long enough to cover a width of the container in an area between the two mixing elements. This can enhance the emptying of feed from the container, since the skirt will prevent a successive shuffling of feed between the two compartments of the container.

The feed mixer may be configured to operate the first and second mixing element with a phase difference. In this context, the term phase difference refers to an angle between an orientation of the auger flightings of the first and second mixing elements in plan view from above, in particular between the back edge of the auger flighting of the first mixing element and the back edge of the auger flighting of the second mixing element. For example, in plan view from above, the back edge of the auger flighting of the first mixing element may be oriented along a longitudinal axis of the feed mixer at a certain time point. If the back edge of the auger flighting of the second mixing element is oriented along a direction enclosing an angle α with the longitudinal axis, the phase difference is given by the angle α. In particular, the phase difference may be between 125° and 245°, in particular between 220° and 230°. In particular, the phase difference may be 225°. Operating the feed mixer with a phase difference between the mixing elements may increase the overall balance and stability of the feed mixer in operation. In particular, since the mixing elements are operating out of phase, rocking movements of the feed mixer that may be caused by the rotation of one mixing element may be suppressed by the rotation of the other mixing element.

Further, the feed mixer may be configured to operate such that there is an angular offset between wings of the first and second mixing element. For example, in plan view from above, a wing of the first mixing element may be oriented along a longitudinal axis of the feed mixer at a certain time point, and a wing of the second mixing element may be oriented along a direction enclosing an angle β with the longitudinal axis. In particular, an angular offset between a wing of the first mixing element and a wing of the second mixing element may be between 20° and 60°. Such an angular offset may prevent wings from the first and the second mixing element entering the area between the mixing elements at the same time. This may further improve the performance of the feed mixer, since it may further reduce a successive shuffling of feed between the two containers. It also may further improve operational stability of the feed mixer.

The feed mixer may further comprise moving means. Thus, it may be possible to move the feed mixer from one place, e.g., a feed kitchen, to another place, e.g., a barn with livestock.

The moving means may comprise a set of wheels. The moving means may further comprise a drive, e.g., a hydrostatic drive. In particular, the container may be arranged on top of the set of wheels.

The feed mixer may be a towed or self-propelled feed mixer vehicle, a feed robot or a stationary feed mixer.

The invention further provides a method for operating a feed mixer. The feed mixer may have one or more features as described above.

The invention further provides a system comprising a stationary feed mixer and a feed distribution wagon, the feed distribution wagon having one or more features of the feed mixer as described above.

### Brief description of the drawings

Advantageous embodiments will now be described in combination with the enclosed figures.
- Figure 1: schematically shows a feed mixer in a perspective view.
- Figure 2: schematically shows a feed mixer according to the prior art in a perspective view.
- Figure 3: schematically shows a feed mixer in a top view.
- Figure 4: schematically shows a feed mixer according to the prior art in a top view.
- Figure 5A: schematically shows an embodiment of a mixing element in a side view.
- Figure 5B: schematically shows an embodiment of a mixing element in a side view.
- Figure 6A: schematically shows a wing in a perspective view.
- Figure 6B: schematically shows a wing in a perspective view.

### Detailed description of the invention

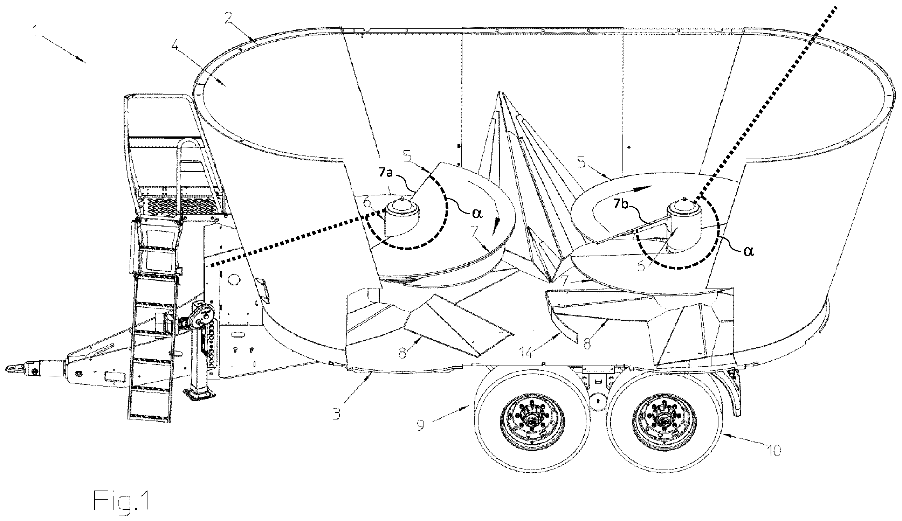

Figure 1 schematically shows a feed mixer 1 in a perspective view. It can be seen that the feed mixer 1 comprises a container 2 with a bottom 3 and a wall 4. Part of the wall 4 is hidden in Figure 1 in order to show the inner part of the feed mixer 1. Figure 1 further shows that the feed mixer 1 comprises a mixing element 5, which is arranged inside the container 2 on the bottom 3. In the embodiment shown in Figure 1, the feed mixer 1 comprises a second mixing element 5, which is of the same type as the first mixing element. However, it is possible that the feed mixer 1 comprises only one mixing element 5, or more than two mixing elements 5.

The mixing element 5 comprises a central column 6, around which the mixing element 5 rotates in operation. It can be seen that an auger flighting 7 is provided on the central column 6. Figure 1 also shows the back edge 7a of the first mixing element's auger flighting 7, and the back edge 7b of the second mixing element's auger flighting 7. Further, four wings 8 extend radially outward from the bottom of the mixing element 6. In the embodiment shown in Figure 1, a skirt 14 is arranged on each wing 8 of the second mixing element 5. However, in other embodiments (not shown), not all wings 8 of the second mixing element may be provided with a skirt 14. Additionally or alternatively, skirts may also be arranged on one or more wings 8 of the first mixing element 5 (not shown).

While the illustrated embodiment in Figure 1 shows two mixing elements 5 that are identical except for the skirts 14 on the wings 8 of the second mixing element 5, it is also possible that the feed mixer 1 comprises mixing elements 5 that are different in other elements. For example, it is possible that the mixing elements 5 have a central column 6 of the same type, but that different components, e.g., different auger flightings or wings are mounted on the respective central columns 6.

It can further be seen that there is a phase difference α between the first mixing element 5 and the second mixing element. In particular, Figure 1 shows that one wing 8 of the second mixing element 5 with a skirt 14 is covering the area between the two mixing elements, while no wing 8 of the first mixing element is in the area between the mixing elements. In the illustrated embodiment, this corresponds to a phase difference α of 225°. In order to illustrate the phase difference α, the orientation of the back edge 7b of the second mixing element's auger flighting is indicated with a dotted line at the position of the first mixing element, and the orientation of the back edge 7a of the first mixing element's auger flighting is indicated with a dotted line at the position of the second mixing element.

Figure 1 further shows that the feed mixer 1 comprises moving means 9, which comprise a set of wheels 10. It can be seen that the container 2 is arranged on top of the set of wheels 10. The moving means 9 may further comprise means to determine a travel distance of the feed mixer 1 (not shown). For example, the moving means 9 may comprise a pulse counter.

It can be seen that the feed mixer 1 is open at its top. Thus, it may be filled with feed from the top, e.g., from a large stationary feed mixer and/or cutter. While not shown in Figure 1, the wall 4 comprises openings to the sides and/or the front and/or the back, through which feed may be dispensed to the outside. The vertical distance between the top of the openings and the top of the mixing elements 5 is 0 cm to 60 cm, such that feed is dropped at the side walls above the openings.

The feed mixer 1 may further comprise weighing means (not shown). The weighing means may, for example, comprise one or more weighbars.

The feed mixer 1 shown in Figure 1 is a towed feed mixer. However, in other embodiments, not shown, the feed mixer 1 may be a self-propelled feed mixer vehicle, a feed robot or a stationary feed mixer.

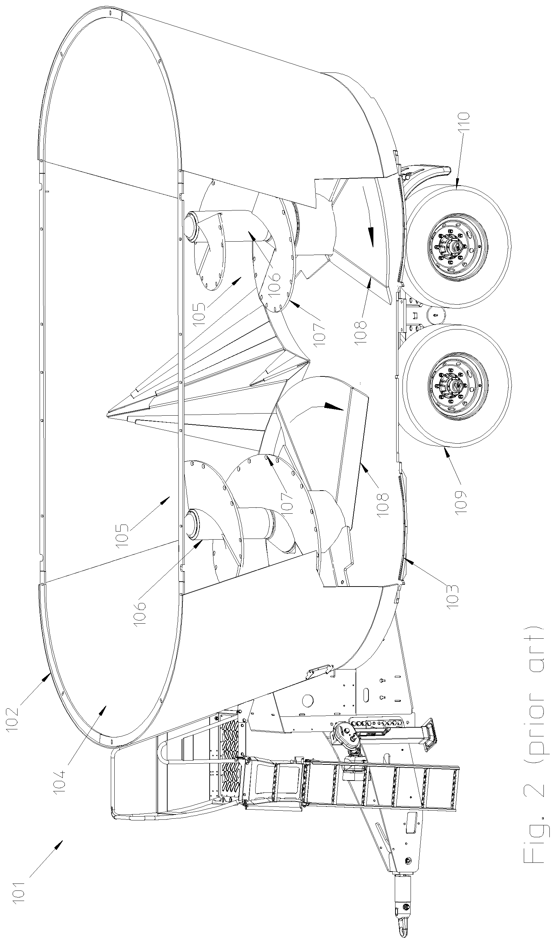

As a comparison, Figure 2 shows a feed mixer 101 according to the prior art in a perspective view. The feed mixer 101 comprises a container 102 with a bottom 103 and a wall 104. Part of the wall 104 is also hidden in order to show the inner part of the feed mixer 101. The feed mixer 101 comprises mixing elements 105, which are arranged inside the container 102. It can be seen in Figure 2 that the mixing elements 105 comprise a central column 106, around which the mixing elements 105 rotate in operation. An auger flighting 107 is provided on the central column 106. Further, two scraping elements 108 extend radially outward from the bottom of the mixing elements 105.

It can be seen in Figure 2 that the flighting 107 tapers from the bottom of the mixing element 105 to its top, i.e., a radius at the top of the auger flighting 107 is smaller than a radius 107 at the bottom of the auger flighting 107. Figure 2 also shows that there is more free space between the mixing elements 105 at their top than in the case of the feed mixer 1 illustrated in Figure 1. Analogously, there is a more free space between the top of the mixing elements 105 and the wall 104 than in the feed mixer 1 illustrated in Figure 1.

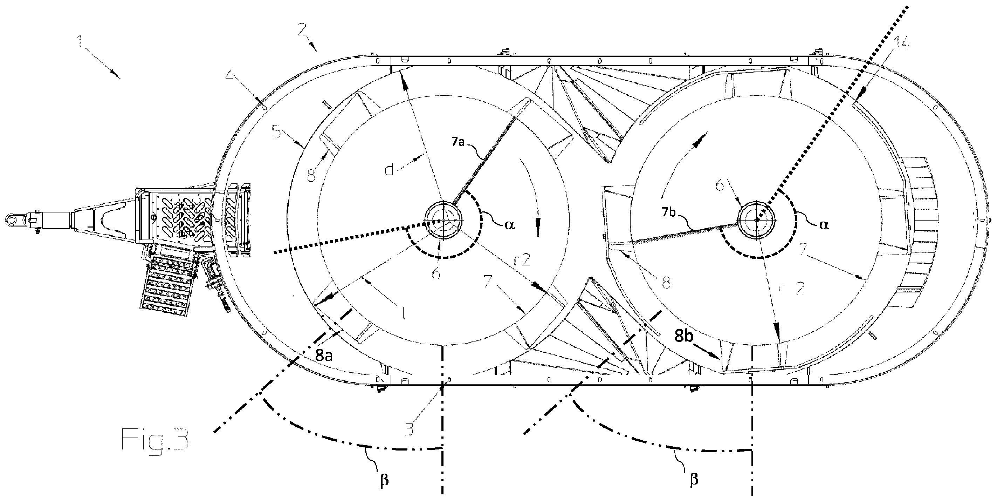

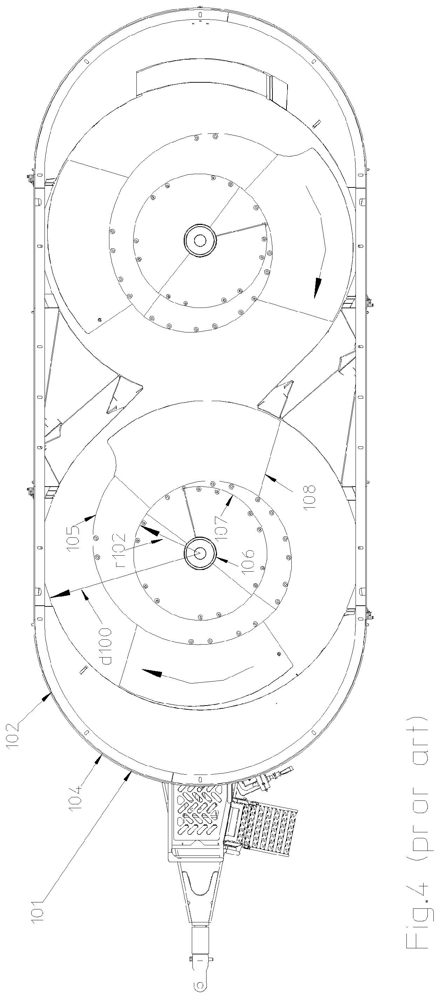

Figure 3 schematically shows the feed mixer 1 of Figure 1 in a top view. Here, the same reference numerals refer to the same components of the feed mixer 1. In the embodiment shown in Figure 2, the radius r2 of the auger flighting 7 at the top of the mixing element 5 is approximately 75% of the distance d between the center of the central column 6 and the inner side of the wall 4 of the container 2. As such, the free space between the auger flighting 7 and the wall 4 at the top of the feed mixer 1 is small compared to the prior art mixers, as is evident from a comparison with Figures 2 and 4. It can further be seen in Figure 3 that the length I of a wing 8 is approximately 98% of the distance d, such that the wings can engage with feed over almost the entire bottom 3 of the feed mixer 1.

Additionally, Figure 3 shows that each skirt 14 extends backward from its respective wing 8 along an arc that covers an angle of approximately 35°. It can be seen that, in the illustrated embodiment, the skirt 14 is long enough to cover the width of the container 2 in an area between the first mixing element and the second mixing element. As in Figure 1, it can be seen that there is phase difference of 225° between the first mixing element 5 and the second mixing element 5. As in Figure 1, the orientations of the back edges 7a and 7b of the auger flightings of first and second mixing elements, respectively, are indicated with dotted lines at the position of the respective other mixing element. It can further be seen in Figure 3 that there is an angular offset β between a wing 8a of the first mixing element and a wing 8b of the second mixing element. For the sake of illustration, the orientations of the wings 8a and 8b are indicated with dashed-dotted lines for both mixing elements. In the illustrated embodiment, the angular offset β is 45°.

As a comparison, Figure 4 shows the feed mixer 101 of Figure 2 according to the prior art in a top view. Again, the same reference numerals refer to the same components of the feed mixer 101. In Figure 4, it can be seen that the radius r102 of the auger flighting 7 at the top of the mixing element 5 is less than 50% of the distance d100 between the center of the central column 106 and the inner side of the wall 104 of the container 102. As such, the free space between the auger flighting 7 and the wall 4 at the top of the feed mixer 1 is substantially larger than in the feed mixer 1 illustrated in Figures 1 and 3. As explained further above, this free space can be problematic, since bridging of feed can occur in that space, which can be difficult to remove with the prior art mixing elements 105 illustrated in Figures 2 and 4.

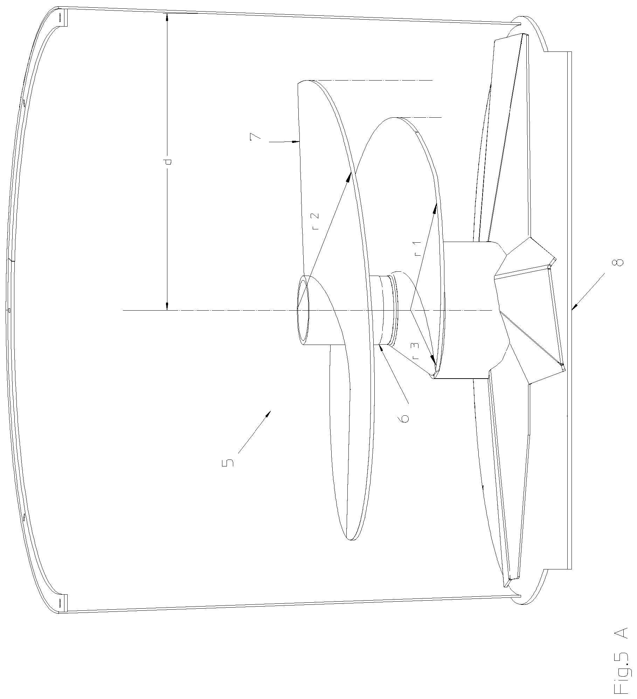

Figure 5A shows a side view of an embodiment of a mixing element 5, e.g., the mixing element 5 illustrated in Figures 1 and 3. Again, the same reference numerals refer to the same components of the feed mixer 1. It can be seen in Figure 5A that the radius r2 at the top of the auger flighting 7, i.e., at its last turn, is substantially larger than the radius r1 at the bottom of the auger flighting 7, i.e., at its first turn. Figure 5A also illustrates that the wings 8 extend essentially up to the walls of the container. Figure 5A further shows that the radius of the auger flighting 7 increases within one full turn to the radius r2 on top of the auger flighting. Additionally, it can be seen that the radius r2 is approximately 75% of the distance d between the center of the central column 6 and the inner side of the wall 4 of the container 2, as also shown in Figure 3.

It can also be seen in Figure 5A that the auger flighting 7 starts directly at the outer side of the central column 6, i.e., it does not have a pickup edge extending radially outward from the central column right at the beginning of the flighting. In other words, the radius r3 of the auger flighting 7 at the beginning of the flighting 7 is the radius of the central column 6. Figure 5A further shows that the radius of the auger flighting 7 increases within one full turn to the radius r2 on top of the auger flighting. Additionally, it can be seen that the radius r2 is approximately 75% of the distance d between the center of the central column 6 and the inner side of the wall 4 of the container 2, as also shown in Figure 3. In the embodiment shown in Figure 5A, the auger flighting 7 comprises between one and two full turns.

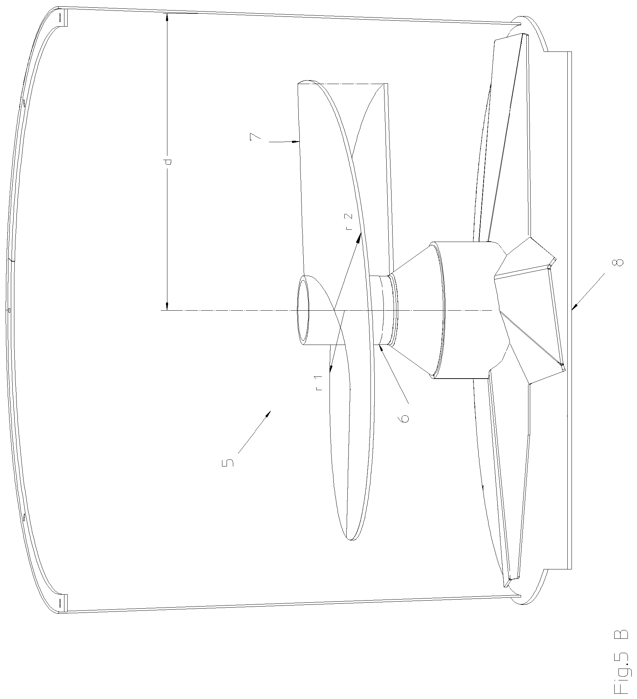

Figure 5B shows another embodiment of a mixing element 5, e.g., the mixing element 5 illustrated in Figures 1 and 3. Again, the same reference numerals refer to the same components of the feed mixer 1. The embodiment illustrated in Figure 5B differs from the embodiment shown in Figure 5A in that r1 and r2 are the same, and that the auger flighting 7 comprises less than one and a half full turns.

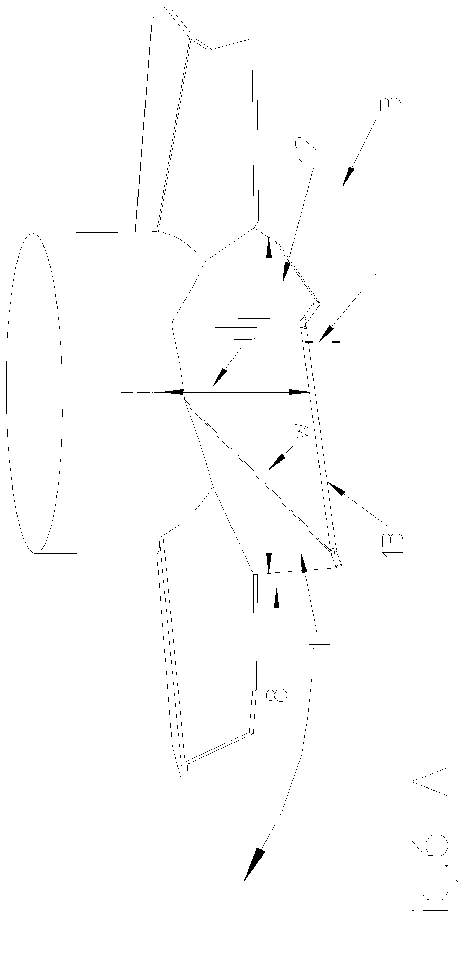

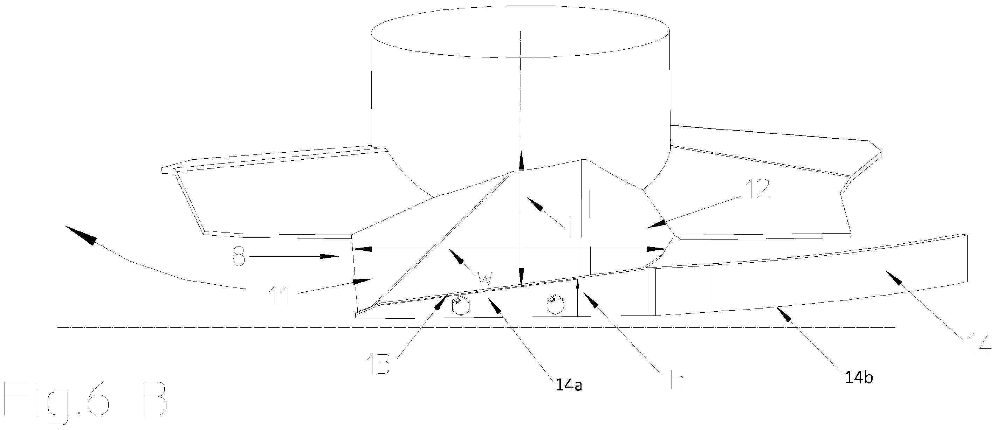

Figure 6A schematically shows a wing 8, e.g., the wing 8 illustrated in Figures 1, 3, and 5, in a perspective view. The bottom 3 of the container of the feed mixer is indicated with a black line in Figure 6A. It can be seen that the wing 8 essentially has the shape of a wedge. The curved arrow indicates the rotation of the respective mixing element and, thus, the movement of the wing 8 during operation of the feed mixer. Figure 6A shows that the wing 8 comprises a first side 11, which in operation of the feed mixer is the front side of the wing 8. It can further be seen that the wing 8 comprises a second side 12, which is arranged opposite to the first side 11, i.e., in operation, the second side 12 is the back side of the wing 8. In the embodiment shown in Figure 6, the wing 8 comprises a third side 13, which connects the first side 11 to the second side 12.

Figure 6A further illustrates that the front side 11 has a flat profile, whereas the second side 12 has a steeper profile than the first side 11. In other words, the inclination of the first side 11 with respect to the bottom of the container is less than the inclination of the second side 12.

Figure 6A further shows a length I, a width w, and a height h of the wing 8. It can be seen that in the illustrated embodiment, these dimensions are not constant. For example, the width w changes along the radial direction (i.e., the direction of the length I). Similarly, the height h changes along the radial direction and the direction of the width w. However, at any point of the wing, the length I is larger than the width w, which in turn is larger than the height h.

Figure 6B shows another embodiment of a wing. In addition to the elements described with reference to Figure 6A, the wing shown in Figure 6B further comprises a skirt 14. It can be seen that the skirt 14 has a first part 14a, which overlaps with the wing 8. It can also be seen that the first part 14a has a generally triangular height profile, starting with a small height and increasing until it reaches a maximum height of the wing 8. After reaching the maximum height, the height of the skirt 14 remains constant. It can also be seen in Figure 6B that the skirt 14 comprises a second part 14b extending backwards from the wing 8, as also shown in Figure 3.

## Claims

1. Feed mixer (1) comprising:
a container (2) comprising a bottom (3) and a wall (4) extending upward from the bottom (3), and
a mixing element (5) arranged inside the container (2),
wherein the mixing element (5) comprises:
a central column (6); and
an auger flighting (7) arranged on the central column (6), wherein the auger flighting (7) has a first radius (r1) closer to the bottom (3) of the container (2) and a second radius (r2) further away from the bottom (3) of the container (2), and
wherein the second radius (r2) is larger than 60%, in particular larger than 75%, of a distance (d) between the central column (6) and the wall (4) of the container (2).

2. Feed mixer (1) according to claim 1, wherein the second radius (r2) is equal to or larger than the first radius (r1).

3. Feed mixer (1) according to claim 2, wherein the radius of the auger flighting (7) increases from the first radius (r1) to the second radius (r2) within one turn of the auger flighting (7).

4. Feed mixer (1) according to one of the preceding claims, wherein the auger flighting (7) comprises less than three turns, in particular less than two turns.

5. Feed mixer (1) according to one of the preceding claims, wherein a third radius (r3) of the auger flighting (7) at its bottom is equal to the radius of the central column (6).

6. Feed mixer (1) according to one of the preceding claims, wherein the mixing element (5) further comprises at least one wing (8) arranged at the bottom of the mixing element (5) and extending radially outward from the central column (6).

7. Feed mixer (1) according to claim 6, wherein the mixing element (5) comprises three or more wings (8), in particular four wings (8).

8. Feed mixer (1) according to one of claims 6 or 7, wherein at least one of wing (8) is wedge-shaped.

9. Feed mixer (1) according to one of claims 6 to 8, wherein a length (I) of a wing (8) is more than 80%, in particular more than 90%, of a distance (d) between the central column (6) and the wall (4) of the container (2).

10. Feed mixer (1) according to one of claims 6 to 9, further comprising a skirt (14) arranged on the at least one wing (8).

11. Feed mixer (1) according to one of the preceding claims, wherein the mixing element (5) is a first mixing element and wherein the feed mixer (1) further comprises at least a second mixing element.

12. Feed mixer (1) according to one of the preceding claims, further comprising one or more openings arranged in the wall (4) of the container (2) for dispensing feed, wherein the at least one wing (8) is configured to expel feed through the one or more openings in operation of the feed mixer (1), in particular wherein a vertical distance between a top of an opening and a topmost turn of the auger flighting (7) is between 0 cm and 60 cm.

13. Feed mixer (1) according to one of the preceding claims, further comprising driving means for the mixing element (5), wherein the driving means are operable to gradually change the rotational speed of the mixing element (5), in particular as a function of a feed discharge rate of the feed mixer (1).

14. Feed mixer (1) according to one of the preceding claims, further comprising moving means (9), in particular an electric drive or an hydrostatic drive or a mechanical variable speed drive comprising a powershift gear.

15. Feed mixer (1) according to any of the preceding claims, wherein the feed mixer (1) is a towed or self-propelled feed mixer vehicle, or a feed robot or a stationary feed mixer.
